(19) Europäisches Patentamt
European Patent Office
Office européen des brevets

(11) EP 4 474 415 A1

(12) # EUROPEAN PATENT APPLICATION

(43) Date of publication:
**11.12.2024 Bulletin 2024/50**

(21) Application number: **23178044.6**

(22) Date of filing: **07.06.2023**

(51) International Patent Classification (IPC):
***C08J 11/14*** *(2006.01)* ***C08J 11/16*** *(2006.01)*
***C08J 11/24*** *(2006.01)* ***C08J 11/26*** *(2006.01)*

(52) Cooperative Patent Classification (CPC):
**C08J 11/14; C08J 11/16; C08J 11/24; C08J 11/26;**
C08J 2375/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **BASF SE**
**67056 Ludwigshafen (DE)**
- **Studiengesellschaft Kohle gGmbH**
**45470 Mülheim an der Ruhr (DE)**

(72) Inventor: **JEVTOVIKJ, Ivana**
**69123 Heidelberg (DE)**

(74) Representative: **Altmann Stößel Dick Patentanwälte PartG mbB**
**Isartorplatz 1**
**80331 München (DE)**

(54) **DEPOLYMERIZATION OF POLYURETHANES BY HYDROLYSIS VIA A COMBINATION OF CATALYSIS AND MECHANOCHEMISTRY**

(57) The present invention relates to a process for the depolymerization of polyurethanes, comprising (1) providing a material comprising one or more polyurethanes; (2) preparing a mixture M1 comprising the material provided in (1), a Bronsted base, a protic solvent, and optionally a cleavage reagent; (3) grinding the mixture M1 prepared in (2), obtaining a mixture M2 comprising one or more polyols; (4) optionally separating the one or more polyols from the mixture M2 obtained in (3).

EP 4 474 415 A1

## Description

TECHNICAL FIELD

The present invention relates to a process for the mechanochemical depolymerization of polyurethanes.

INTRODUCTION

In the last three decades, there has been an enormous increase in worldwide plastics demand. For example, in the last 10 years, the amount of plastics produced worldwide has increased by almost 50%. Within 30 years, it has even almost quadrupled reaching an amount of 359 million metric tons in 2018. From these facts, it becomes clear that production of said huge amounts of plastics is followed by a need to dispose or recycle spent plastics. Preference should be given to recycling as thereby valuable materials, e.g. compounds which can act as monomers, can be added back to the value chain, e.g. by direct re-use in plastics production.

In order to reduce the waste and reduce the negative impact on the environment, there is a need to develop processing techniques to recover materials from plastic waste. The recycling process should lead to the recovery of monomers, or at least oligomers, which can be employed for the production of virgin polymer. Typically, such depolymerization processes are difficult to be realized at mild conditions for the vinyl polymers like Polyethylene, Polypropylene, Polystyrene and Polyvinyl chloride due to the similarly stable covalent bonds inside and outside their repeat units. Unlike the other most common polymerized plastics, Polyurethane (PU) is a polymer fabricated by a condensation reaction and features a carbamate bond in the final polymer. Therefore, it can be possible to selectively recover monomers if the carbamate bond can be broken compared to other bonds inside the polymer.

The ongoing development of chemical recycling pathways for PU include hydrogenolysis, hydrolysis, aminolysis, phosphorolysis and glycolysis. In general, after being attacked by the active hydrogen atoms at mild temperature (130-200°C), the carbamate bond in PU will be broken and yield polyol with amine and urea. The pincer complexes of transitional metals can be efficiently promote the hydrogenation of carbamate bond but the homogeneous catalysts may not be easily recovered from the resulting products. In analogy to hydrolysis, the break of carbamate bond can be facilitated by transesterification using amine, phosphate or glycol as cleavage reagents. Among these methods, the glycolysis of PU, especially the split-phase glycolysis process with crude glycerol, is considered as the most promising pathway towards the industrial implantation from an environmental, technical and economic point of view. However, the energy consumption during the process, the cost of the excess glycol to PU, and the potentially reduced quality of polyol products resulted from the glycol residue still limit the market competitiveness of PU chemical recycling processes.

S. Chuayjuljit et al. (Chemical recycling of rigid polyurethane foam scrap via base catalyzed aminolysis, J. Met. Mater. Min., 2002, Vol. 12, p. 19-22) discloses rigid polyurethane foam depolymerized by aminolysis using diethylenetriamine as a degrading agent and sodium hydroxide as both a reactant and catalyst in solution.

H. R. Van der Wal (New Chemical Recycling Process for Polyurethanes, Journal of Reinforced Plastics and Composites, 1994, Vol. 13, p. 87-96) discloses a chemical recycling process to produce relatively high performance polyols from the recycling of polyurethanes.

Despite the advances made in the field of the depolymerization of polyurethanes their remains the need for improved processes which are more efficient and better for the environment.

DETAILED DESCRIPTION

It was therefore an object of the present invention to provide an improved process for the industrial scale depolymerization of polyurethanes. Further, it was an object of the present invention to lower the reaction temperature, to lower the volume of solvent and to make the separation of products easier. Thus, it has been surprisingly found that the specific mechano-catalytic treatment of a mixture of reactants results in a recovery of 50 wt.-% or more of one or more dissoluble polyols. Further, it has quite unexpectedly been found that the mechano-catalytic activation route requires a lower reaction temperature and a lower volume of solvent, thus substantially reducing the environmental impact. Furthermore, the separation of the one or more polyol products is more efficient and requires lower energy consumption than when employing conventional solvolysis pathways.

Therefore, the present invention relates to a process for the depolymerization of polyurethanes, comprising

(1) providing a material comprising one or more polyurethanes;
(2) preparing a mixture M1 comprising the material provided in (1), a Bronsted base, a protic solvent, and optionally a cleavage reagent;
(3) grinding the mixture M1 prepared in (2), obtaining a mixture M2 comprising one or more polyols;
(4) optionally separating the one or more polyols from the mixture M2 obtained in (3).

The polyols obtained as described above may be employed for every conceivable use in industrial and consumer applications, including, but not limited to, polyurethane compounds which, in turn, may be employed for uses including, but not limited to:

- Foam cushioning, for example for furniture, bedding, and packaging,
- Rigid foam insulation, for example for building and refrigeration,
- Flexible foam, for example for upholstery, mattresses, footwear, and seals,
- Elastomers, for example for automotive and industrial parts, such as suspension bushings, gaskets, and seals,
- Adhesives, sealants, and coatings,
- Roller and drive belts, for example for conveyors, power transmissions, and agricultural equipment,
- Medical devices and implants, such as prosthetics and artificial heart valves
- Fibers, non-woven fabrics, and textiles,
- Paints, coatings, and inks,
- Electronic components, such as casings, gaskets, and vibration dampers.

It is preferred that from 30 to 100 wt.-%, more preferably from 35 to 98 wt.-%, more preferably from 40 to 97 wt.-%, more preferably from 45 to 96 wt.-%, more preferably from 50 to 95 wt.-% of the material provided in (1) consists of the one or more polyurethanes.

It is preferred that the mixture M1 prepared in (2) has a solid content in the range of from 40 to 99 wt.-%, more preferably from 45 to 98 wt.-%, more preferably from 50 to 97 wt.-%, more preferably from 55 to 95 wt.-%, more preferably from 60 to 90 wt.-%, more preferably from 70 to 85 wt.-%, based on the total weight of M1.

It is preferred that the Bronsted base in (2) is an inorganic Bronsted base, more preferably a Bronsted base selected from the group consisting of NaOH, KOH, LiOH, $Ca(OH)_2$, $Mg(OH)_2$, $Ba(OH)_2$, $Cu(OH)_2$, $Fe(OH)_3$, $Sr(OH)_2$, $Na_2CO_3$, $K_2CO_3$, $Li_2CO_3$, $CaCO_3$, $MgCO_3$, $BaCO_3$, $CuCO_3$, $Fe_2(CO_3)_3$, and $SrCO_3$, and a mixture of two or more thereof, wherein more preferably the Bronsted base is NaOH and/or KOH, more preferably wherein the Bronsted base is NaOH.

It is preferred that from 0.1 to 20 wt.-%, more preferably from 1 to 19 wt.-%, more preferably from 3 to 17 wt.-%, more preferably from 5 to 15 wt.-%, more preferably from 7 to 13 wt.-%, more preferably from 9 to 11 wt.-% of the mixture M1 prepared in (2) consists of the Bronsted base, based on the weight of the material provided in (1).

It is preferred that the Bronsted base has a $pK_b$ value of 2 or lower, more preferably 1.5 or lower, more preferably 1 or lower, more preferably 0.5 or lower, more preferably 0 or lower, more preferably -1 or lower.

The $pK_b$ value is the negative logarithm of the base dissociation constant $K_b$:

$$pK_b = -\log_{10} K_b$$

wherein the base dissociation constant $K_b$ is the equilibrium constant of the dissociation reaction of a base in water:

$$BH^+ + OH^- \rightleftharpoons B + H_2O$$

$BH^+$ is a base which dissociates in the conjugate acid of the base B and a hydrogen ion which reacts with OH- to form $H_2O$. When the reaction reaches an equilibrium, the base dissociation constant $K_b$ may be calculated:

$$K_b = \frac{c(B) \cdot c(H_2O)}{c(BH^+) \cdot c(OH^-)}$$

It is preferred that grinding according to (3) is carried out at a temperature in the range of from 170°C or less, more preferably from 10 to 170 °C, more preferably from 20 to 170 °C, more preferably from 40 to 150 °C, more preferably from 60 to 125 °C, more preferably from 85 to 95 °C.

It is preferred that (2) comprises

(2.1) preparing a mixture M3 comprising the material provided in (1) and a Bronsted base;
(2.2) optionally grinding the mixture M3 obtained in (2.1);
(2.3) preparing a mixture M1 comprising the mixture obtained in (2.1) or (2.2), a protic solvent, and an optional cleavage reagent.

In the case where (2) comprises steps (2.1) to (2.3), it is preferred that the Bronsted base is dissolved in a solvent and wherein the concentration of the Bronsted base in the solvent ranges of from 0.01 to 10 wt.-%, more preferably from 0.1 to 8 wt.-%, more preferably from 0.3 to 5 wt.-%, more preferably from 0.5 to 3 wt.-%, based on the total weight of the solution.

Yet further, it is preferred that (2) comprises

(2.1) preparing a mixture M3 comprising the material provided in (1) and a Bronsted base;
(2.2) grinding the mixture M3 obtained in (2.1);
(2.2.1) separating the solvent from the mixture obtained in (2.2)
(2.3) preparing a mixture M1 comprising the mixture obtained in (2.2.1), a protic solvent, and optionally a cleavage reagent.

Yet further, it is preferred that grinding according to (2.2) is carried out at a temperature in the range of from 10 to 50 °C, more preferably from 12 to 40 °C, more preferably from 14 to 30 °C, more preferably from 16 to 25 °C, more preferably from 18 to 22 °C.

It is preferred that independently from each other grinding in (2.2) or (3) is carried out in a mixing device, more preferably a milling device, more preferably a milling device with a heating function.

It is preferred that the mixing device is selected from the group consisting of a stirred media mill, a planetary ball mill, a ball mill, a roller mill, a kneader, a shaker mill, a high shear mixer, and a mix muller, wherein more preferably grinding in (2.2) or (3) is carried out in a stirred media mill, a ball mill, a roller mill, a planetary ball mill, and/or a high shear mixer.

Yet further, it is preferred that independently from each other grinding in (2.2) is carried out in a planetary ball mill, and wherein the planetary ball mill is operated at a speed in the range of from 100 rpm to 1000 rpm, more preferably from 250 rpm to 850 rpm, more preferably from 400 to 700 rpm, more preferably from 500 rpm to 600 rpm.

Yet further, it is preferred that independently from each other grinding in (2.2) or (3) is carried out in a ball mill using balls made of a material selected from the group consisting of stainless steel, ceramic, and rubber, preferably from the group consisting of stainless steel and ceramic, wherein more preferably the balls of the ball mill are made of stainless steel.

Alternatively, it is preferred that independently from each other grinding in (2.2) or (3) is carried out in a shaker mill, and grinding in (3) is operated at a frequency in the range of from 5 Hz to 50 Hz, more preferably from 10 to 40 Hz, more preferably from 15 to 30 Hz, more preferably from 20 to 25 Hz.

It is preferred that independently from each other grinding in (2.2) or (3) is carried out in an inert gas atmosphere, more preferably in nitrogen, argon or mixtures thereof, more preferably wherein grinding is carried out in argon.

It is preferred that independently from each other grinding in (2.2) or (3) is carried out in a milling device using grinding media, more preferably grinding balls, having a diameter in the range of from 5 to 200 mm, more preferably from 7 to 150 mm, more preferably from 8 to 100 mm, more preferably from 9 to 50mm, more preferably from 10 to 20 mm.

In the case where independently from each other grinding in (2.2) or (3) is carried out in a milling device, it is preferred that the filling degree of the grinding media in the milling device is in the range of from 10 % to 60%.

It is preferred that independently from each other the mixture prepared in (2) or (2.3) comprises one or more cleavage reagents selected from the group consisting of DABCO, DBU, MgO, Cu/MgO, Ru, Ag, Pd, and Mn, and a mixture of two or more thereof, more preferably DABCO and Cu/MgO.

It is preferred that independently from each other the mixture M1 prepared in (2) or (2.3) comprises one or more cleavage reagents in the range of from 1 to 30 wt.-%, more preferably from 10 to 25 wt.-%, more preferably from 13 to 23 wt.-%, more preferably from 15 to 21 wt.-%, more preferably from 17 to 19 wt.-%, based on the weight of mixture M1.

It is preferred that independently from each other the mixture M1 prepared in (2) or (2.3) comprises a protic solvent selected from the group consisting of formic acid, n-butanol, isopropanol, nitromethane, ethanol, methanol, acetic acid and water, and a mixture of two or more thereof, wherein more preferably the protic solvent is methanol and/or water, more preferably wherein the protic solvent is water.

It is preferred that the protic solvent has a $pK_a$ value of 15.9 or lower, more preferably 15.9 or lower, more preferably 15.8 or lower, more preferably 15,75 or lower, more preferably 15.7 or lower, more preferably 15.6 or lower.

The $pK_a$ value is the negative logarithm of the acid dissociation constant $K_a$:

$$pK_a = -\log_{10} K_a$$

wherein the acid dissociation constant $K_a$ is the equilibrium constant of the dissociation reaction of an acid in water:

$$HA + H_2O \rightleftharpoons A^- + H_3O^+$$

HA is an acid which dissociates in the conjugate base of the acid $A^-$ and a hydrogen ion which reacts with water to form $H_3O^+$. When the reaction reaches an equilibrium, the acid dissociation constant $K_a$ may be calculated:

$$K_a = \frac{c(A^-) \cdot c(H_3O^+)}{c(HA) \cdot c(H_2O)}$$

It is preferred that the mixture M1 prepared in (2) or (2.3) comprises a protic solvent in the range of from 20 to 70 wt.-%, more preferably from 25 to 60 wt.-%, more preferably from 30 to 55 wt.-%, more preferably from 35 to 50 wt.-%, more preferably from 40 to 46 wt.-%, based on the weight of mixture M1.

It is preferred that the protic solvent is water and wherein the mixture M1 prepared in (2) or (2.3) comprises water in the range of from 10 to 50 wt.-%, more preferably from 12 to 40 wt.-%, more preferably from 13 to 35 wt.-%, more preferably from 14 to 25 wt.-%, more preferably from 15 to 20 wt.-%, based on the weight of mixture M1.

It is preferred that independently from each other grinding in (2.2) or (3) is carried out for a duration in the range of from 0.1 to 6 h, more preferably from 0.3 to 3 h, more preferably from 0.5 to 1.5 h, more preferably from 0.8 to 1.2 h.

The present invention is further illustrated by the following set of embodiments and combinations of embodiments resulting from the dependencies and back-references as indicated. In particular, it is noted that in each instance where a range of embodiments is mentioned, for example in the context of a term such as "The process of any one of embodiments 1 to 4", every embodiment in this range is meant to be explicitly disclosed for the skilled person, i.e. the wording of this term is to be understood by the skilled person as being synonymous to "The process of any one of embodiments 1, 2, 3 and 4". Further, it is explicitly noted that the following set of embodiments it not the set of claims determining the extent of protection, but represents a suitably structured part of the description directed to general and preferred aspects of the present invention.

1. A process for the depolymerization of polyurethanes, comprising

   (1) providing a material comprising one or more polyurethanes;
   (2) preparing a mixture M1 comprising the material provided in (1), a Bronsted base, a protic solvent, and optionally a cleavage reagent;
   (3) grinding the mixture M1 prepared in (2), obtaining a mixture M2 comprising one or more polyols;
   (4) optionally separating the one or more polyols from the mixture M2 obtained in (3).

2. The process according to embodiment 1, wherein from 30 to 100 wt.-%, preferably from 35 to 98 wt.-%, more preferably from 40 to 97 wt.-%, more preferably from 45 to 96 wt.-%, more preferably from 50 to 95 wt.-% of the material provided in (1) consists of the one or more polyurethanes.

3. The process according to embodiment 1 or 2, wherein the mixture M1 prepared in (2) has a solid content in the range of from 40 to 99 wt.-%, preferably from 45 to 98 wt.-%, more preferably from 50 to 97 wt.-%, more preferably from 55 to 95 wt.-%, more preferably from 60 to 90 wt.-%, more preferably from 70 to 85 wt.-%, based on the total weight of M1.

4. The process according to any of embodiments 1 to 3, wherein the Bronsted base in (2) is an inorganic Bronsted base, preferably a Bronsted base selected from the group consisting of NaOH, KOH, LiOH, $Ca(OH)_2$, $Mg(OH)_2$, $Ba(OH)_2$, $Cu(OH)_2$, $Fe(OH)_3$, $Sr(OH)_2$, $Na_2CO_3$, $K_2CO_3$, $Li_2CO_3$, $CaCO_3$, $MgCO_3$, $BaCO_3$, $CuCO_3$, $Fe_2(CO_3)_3$, and $SrCO_3$, and a mixture of two or more thereof, wherein more preferably the Bronsted base is NaOH and/or KOH, more preferably wherein the Bronsted base is NaOH.

5. The process according to any of embodiments 1 to 4, wherein from 0.1 to 20 wt.-%, preferably from 1 to 19 wt.-%, more preferably from 3 to 17 wt.-%, more preferably from 5 to 15 wt.-%, more preferably from 7 to 13 wt.-%, more preferably from 9 to 11 wt.-% of the mixture M1 prepared in (2) consists of the Bronsted base, based on the weight of the material provided in (1).

6. The process according to any of embodiments 1 to 5, wherein the Bronsted base has a $pK_b$ value of 2 or lower, preferably 1.5 or lower, more preferably 1 or lower, more preferably 0.5 or lower, more preferably 0 or lower, more

preferably -1 or lower.

7. The process according to any of embodiments 1 to 6, wherein grinding according to (3) is carried out at a temperature in the range of from 170°C or less, preferably from 10 to 170 °C, more preferably from 20 to 170 °C, more preferably from 40 to 150 °C, more preferably from 60 to 125 °C, more preferably from 85 to 95 °C.

8. The process according to any of embodiments 1 to 7, wherein (2) comprises

(2.1) preparing a mixture M3 comprising the material provided in (1) and a Bronsted base;
(2.2) optionally grinding the mixture M3 obtained in (2.1);
(2.3) preparing a mixture M1 comprising the mixture obtained in (2.1) or (2.2), a protic solvent, and an optional cleavage reagent.

9. The process according to embodiment 8, wherein the Bronsted base is dissolved in a solvent and wherein the concentration of the Bronsted base in the solvent ranges of from 0.01 to 10 wt.-%, preferably from 0.1 to 8 wt.-%, more preferably from 0.3 to 5 wt.-%, more preferably from 0.5 to 3 wt.-%, based on the total weight of the solution.

10. The process according to embodiment 8 or 9, wherein (2) comprises

(2.1) preparing a mixture M3 comprising the material provided in (1) and a Bronsted base;
(2.2) grinding the mixture M3 obtained in (2.1);
(2.2.1) separating the solvent from the mixture obtained in (2.2)
(2.3) preparing a mixture M1 comprising the mixture obtained in (2.2.1), a protic solvent, and optionally a cleavage reagent.

11. The process according to any one of embodiments 8 to 10, wherein grinding according to (2.2) is carried out at a temperature in the range of from 10 to 50 °C, preferably from 12 to 40 °C, more preferably from 14 to 30 °C, more preferably from 16 to 25 °C, more preferably from 18 to 22 °C.

12. The process according to any one of embodiments 1 to 11, wherein independently from each other grinding in (2.2) or (3) is carried out in a mixing device, preferably in a milling device, more preferably in a milling device with a heating function.

13. The process according to embodiment 12, wherein the mixing device is selected from the group consisting of a stirred media mill, a planetary ball mill, a ball mill, a roller mill, a kneader, a shaker mill, a high shear mixer, and a mix muller, wherein more preferably grinding in (2.2) or (3) is carried out in a stirred media mill, a ball mill, a riller mill, a planetary ball mill, and/or a high shear mixer.

14. The process according to embodiment 12 or 13, wherein independently from each other grinding in (2.2) or (3) is carried out in a planetary ball mill, and wherein the planetary ball mill is operated at a speed in the range of from 100 rpm to 1000 rpm, preferably from 250 rpm to 850 rpm, more preferably from 400 to 700 rpm, more preferably from 500 rpm to 600 rpm.

15. The process according to any one of embodiments 12 to 14, wherein independently from each other grinding in (2.2) or (3) is carried out in a ball mill using balls made of a material selected from the group consisting of stainless steel, ceramic, and rubber, preferably from the group consisting of stainless steel and ceramic, wherein more preferably the balls of the ball mill are made of stainless steel.

16. The process according to embodiment 12 or 13, wherein independently from each other grinding in (2.2) or (3) is carried out in a shaker mill, and wherein grinding in (3) is operated at a frequency in the range of from 5 Hz to 50 Hz, preferably from 10 to 40 Hz, more preferably from 15 to 30 Hz, more preferably from 20 to 25 Hz.

17. The process according to any of embodiments 1 to 16, wherein independently from each other grinding in (2.2) or (3) is carried out in an inert gas atmosphere, preferably in nitrogen, argon or mixtures thereof, more preferably wherein grinding is carried out in argon.

18. The process according to any of embodiments 12 to 17, wherein independently from each other grinding in (2.2) or (3) is carried out in a milling device using grinding media, preferably grinding balls, having a diameter in the range

of from 5 to 200 mm, preferably from 7 to 150 mm, more preferably from 8 to 100 mm, more preferably from 9 to 50mm, more preferably from 10 to 20 mm.

19. The process according to embodiment 18, wherein the filling degree of the grinding media in the milling device is in the range of from 10 % to 60%.

20. The process according to any of embodiments 1 to 19, wherein independently from each other the mixture prepared in (2) or (2.3) comprises one or more cleavage reagents selected from the group consisting of DABCO, DBU, MgO, Cu/MgO, Ru, Ag, Pd, and Mn, and a mixture of two or more thereof, preferably DABCO and Cu/MgO.

21. The process according to any of embodiments 1 to 20, wherein independently from each other the mixture M1 prepared in (2) or (2.3) comprises one or more cleavage reagents in the range of from 1 to 30 wt.-%, preferably from 10 to 25 wt.-%, more preferably from 13 to 23 wt.-%, more preferably from 15 to 21 wt.-%, more preferably from 17 to 19 wt.-%, based on the weight of mixture M1.

22. The process according to any of embodiments 1 to 21, wherein independently from each other the mixture M1 prepared in (2) or (2.3) comprises a protic solvent selected from the group consisting of formic acid, n-butanol, isopropanol, nitromethane, ethanol, methanol, acetic acid and water, and a mixture of two or more thereof, wherein preferably the protic solvent is methanol and/or water, more preferably wherein the protic solvent is water.

23. The process according to any of embodiments 1 to 22, wherein the protic solvent has a $pK_a$ value of 15.9 or lower, preferably 15.85 or lower, more preferably 15.8 or lower, more preferably 15,75 or lower, more preferably 15.7 or lower, more preferably 15.6 or lower.

24. The process according to any of embodiments 1 to 23, wherein the mixture M1 prepared in (2) or (2.3) comprises a protic solvent in the range of from 20 to 70 wt.-%, preferably from 25 to 60 wt.-%, more preferably from 30 to 55 wt.-%, more preferably from 35 to 50 wt.-%, more preferably from 40 to 46 wt.-%, based on the weight of mixture M1.

25. The process according to any of embodiments 1 to 24, wherein the protic solvent is water and wherein the mixture M1 prepared in (2) or (2.3) comprises water in the range of from 10 to 50 wt.-%, preferably from 12 to 40 wt.-%, more preferably from 13 to 35 wt.-%, more preferably from 14 to 25 wt.-%, more preferably from 15 to 20 wt.-%, based on the weight of mixture M1.

26. The process according to any of embodiments 1 to 25, wherein independently from each other grinding in (2.2) or (3) is carried out for a duration in the range of from 0.1 to 6 h, preferably from 0.3 to 3 h, more preferably from 0.5 to 1.5 h, more preferably from 0.8 to 1.2 h.

EXAMPLES

**Reference Example 1: Preparation of polyurethane (PU) powder from commercial PU sponge**

1.4 g of a commercial PU sponge (Spontex, the yellow soft part) was cut into ca. 8 $cm^3$ cubes, then transferred into a home-built stainless steel milling jar (see Figure 1) for the planetary ball milling in a Fritsch Pulverisette 6. Seven 10 mm and two 12 mm stainless steel milling balls (in total ca. 40 g) were placed at the bottom of the milling jar. The milling chamber was then covered with a Teflon-lid with stainless steel filter, which only allows the penetration of gases, then the stainless steel jar was sealed by its own lid with six tightened screws by a torque wench (20 Nm). After being properly sealed, the air inside the milling chamber was replaced with Ar at ambient pressure by connecting the gas valve to a Schlenk line. The milling jar containing the PU sponge and milling balls was then mounted to the Fritsch Pulverisette 6 for milling. At room temperature, each batch was milled in periods of milling for 60 minutes at 600 rpm, followed by a pause of 10 min to allow cooling, vefore milling continued for another period of 60 minutes in a reversed direction. After total of 6 hours milling, the PU sponge was completely crushed into fine PU powders for the following study of depolymerization. The PU powders are prepared under Ar to avoid the influence from $O_2$ and moisture during the milling.

**Reference Example 2: The impregnation of NaOH to PU powder to prepare PUiNaOH**

In a 50 mL flask, 1 g of PU powder was mixed with 10 g (for PUiNaOH-10) of a 1 wt.-% NaOH aqueous solution or 10 g (for PUiNaOH-100) of a 10wt.-% NaOH aqueous solution. The mixture was stirred with a magnetic bar in the close flask at room temperature for 2 hours. The water in the flask was then removed by a rotation evaporation at 50

°C in 2 hours. The impregnated PU powder (10 wt.-% NaOH loading, labeled as PUiNaOH-10, or 100 wt.-% NaOH loading, labeled as PUiNaOH-100) was dried in a vacuum oven at 50 °C overnight then kept in Ar to avoid the absorption of water and $CO_2$ from air.

**Reference Example 3: The depolymerization of PU by planetary ball mill at room temperature**

0.2 g of PU powder was added into the stainless steel milling jar, the cleavage reagents were then added together with the Bronsted base with a certain amount of proton source. Seven 10 mm and two 12 mm stainless steel milling balls (in total ca. 40 g) were placed at the bottom of the milling jar. After the liquid was added to the mixture dropwise, the powder got wet but did not form a slurry. The milling chamber was then covered with Teflon-lid and sealed by its own stainless steel lid. The milling jar was then mounted to the Fritsch Pulverisette 6 for milling. At room temperature, the mixture was milled in periods of milling for 60 minutes at 600 rpm, followed by a pause of 5 min to allow cooling, before milling continued for another period of 60 minutes in reversed direction. After 5 hours of milling, the solid mixture of products from depolymerization was collected for analysis.

**Reference Example 4: The depolymerization of PU by shaker mill with ceramic heating box**

0.22 g of PUiNaOH-10 powder was added into a home-built stainless steel milling jar, the cleavage reagents were then added with a certain amount of proton source. Three 10 mm stainless steel balls (in total ca. 12 g) were placed at the bottom of the milling jar. After the liquid was added to the mixture dropwise, the powder got wet but did not form a slurry. The milling chamber was then sealed by its stainless steel lid with a Polyether ether ketone (PEEK) flat O-ring. The milling jar was then mounted to a modified Retsch MM400 shaker mill with home-built ceramic heating box covering the milling jar. The heating box is connected to a temperature-controlling unit which can adjust the box temperature according to the target temperature set for the thermal couple attached to the milling jar. The shaker mill was started at 25 Hz frequency together with the temperature ramping of the heating box. In order to heat the milling jar up to 90°C in short time, the temperature for the heating box was set as 240°C. It usually took less than 15 minutes to reach 60 °C and roughly 30 min to reach 90 °C after the milling jar being heated in the box. When the milling was finished, the milling jar was taken off and opened immediately. The solid products was transferred to a 50 mL centrifuge tube with 30 mL ethyl acetate before the milling jar was allowed to cool down. The centrifuge tube was placed in an ultrasonic bath at room temperature for 5 min to completely extract the soluble products. The dissoluble products were then separated from the solid residue by a centrifuge at 9000 rpm for 10 minutes, leading to a clear yellow solution. The solvent was then removed by a rotation evaporation at 45 °C in 30 minutes to obtain dissoluble polyol (PL). The residual solid (PS) from the reaction was dried together with PL in a vacuum oven at 50 °C overnight.

**Reference Example 5: The quantification of dissoluble polyol product with internal standard**

The weight of dry PL and PS were measured before the further quantification of PL. 40 mg (20wt.-%) 1,3,5-Tribromobenzene (Fw: 315) was added to the flask containing PL as an internal standard for the $^1$H NMR spectra. The mixture of standard and PL was dissolved in 2 mL $CDCl_3$ and $^1$H NMR spectra were measured using a Bruker Advance-III 300 MHz. The ratio a between the features of the nine hydrogen atoms from the three methyl groups in the repeat unit of polyol (Peak 1, red shade) and the three hydrogen atoms on the benzene rings of standard (Peak 2, blue shade) can be calculated from their integration areas (Figure 1). Then the weight percentage (wt.-%) of the dissoluble polyol (Fw: 6015, n= 33) to the parent PU can be calculated from the transformation of the following equation.

Equation 1:

$$a = \frac{x \cdot 9 \cdot 33}{6015} \div \frac{20 \cdot 3}{315}$$

Equation 2:

$$x = \frac{a \cdot 20 \cdot 3}{315} \div \frac{9 \cdot 33}{6015}$$

**Example 1: Catalytic testing - influence of cleavage reagents**

The PU sample was prepared according to Reference Example 1 and the depolymerization was performed according to Reference Example 3 wherein 100 wt.-% of protic solvent based on the weight of initial PU powder were added. The yield of dissoluble polyol from the depolymerization was quantified by their $^1H$ NMR spectra according to Reference Example 5.

Table 1 shows an overview of the compositions of the tested samples.

| Example | Bronsted base | Cleavage reagent | Solvents |
|---|---|---|---|
| Example 1.1 | 10 wt.-% NaOH | 10 wt.-% DABCO | $H_2O$:MeOH (1:2.8) |
| Example 1.2 | 10 wt.-% NaOH | 10 wt.-% DBU | $H_2O$:MeOH (1:2.8) |
| Example 1.3 | 10 wt.-% NaOH | - | $H_2O$:MeOH (1:2.8) |
| Comparative Example 1 | - | 10 wt.-% (DABCO + $Na_2CO_3$) | $H_2O$:MeOH (1:2.8) |
| Comparative Example 2 | - | 10 wt.-% DABCO | $H_2O$:MeOH (1:2.8) |
| Comparative Example 3 | - | 10 wt.-% DABCO | MeOH |
| Comparative Example 4 | - | 10 wt.-% DBU | MeOH |

Firstly, different compositions with NaOH as Bronsted base, Triethylenediamine (DABCO) and 1,8-Diazabicyclo[5.4.0]undec-7-ene (DBU) as cleavage reagents and MeOH and $H_2O$:MeOH mixtures as proton source were tested for the depolymerization of PU powders. The $^1H$ NMR spectra of $CDCl_3$ solutions extracted from the solid mixture recovered from ball milling (see Fig. 2) showed that the cleavage reagents alone could not catalyze the methanolysis of PU, so that the content of dissoluble polyol was barely increased compared to the original PU powder after the treatment (see Comparative Examples 1-4). When $Na_2CO_3$ was used together with DABCO (see Comparative Example 1), the increased yield of polyol was still much lower than the yield obtained from 10 wt.-% NaOH alone (see Example 4). A significant increase of polyol was achieved when the NaOH and cleavage reagent were used together. Considering the pKb values of the tested bases in water (NaOH: -2.4, DBU: 2.5, $Na_2CO_3$: 3,6, DABCO: 5.2), the results suggest that methanolysis of PU requires a certain basicity to break the carbamate bond.

**Example 2: Catalytic testing - influence of proton source**

The impregnated PU sample PUiNaOH-100 was prepared according to Reference Example 2 to improve the distribution of NaOH on PU powder and the depolymerization was performed according to Reference Example 3, wherein 67 wt.-% of alcohol based on the weight of initial PU powder were added. The yield of dissoluble polyol from the depolymerization was quantified by their $^1H$ NMR spectra according to Reference Example 5.

Table 2 shows an overview of the compositions of the tested samples.

| Example | Cleavage reagent | Solvents |
|---|---|---|
| Example 2.1 | 10 wt.-% DABCO | MeOH |
| Example 2.2 | 10 wt.-% DABCO | iPrOH |
| Example 2.3 | 10 wt.-% DABCO | EtOH |

The obtained PUiNaOH-100 was mixed with DABCO and methanol (MeOH), ethanol (EtOH) or isopropanol (iPrOH). Surprisingly, only methanolysis resulted in a significant increase of polyol yield while EtOH and iPrOH could not further depolymerize PU at these conditions (see Fig. 3). Although the pKa values of these proton sources in water are similar ($H_2O$: 14, MeOH: 15.5, EtOH: 16, iPrOH: 17.3), their proton affinity is highly solvent dependent. For example, MeOH and glycerol have lower $pK_a$ values than $H_2O$ when they are dissolved in iPrOH.

**Example 3: Catalytic testing - influence of temperature and proton source**

The impregnated PU sample PUiNaOH-10 was prepared according to Reference Example 2 and the depolymerization was performed according to Reference Example 4. The yield of dissoluble polyol from the depolymerization

was quantified by their $^1H$ NMR spectra according to Reference Example 5.

Table 3 shows an overview of the compositions of the tested samples.

| | Cleavage reagents | Solvents | Temperature |
|---|---|---|---|
| Example 3.1 | - | 80 wt.-% MeOH | 20°C |
| Example 3.2 | 25 wt.-% Cu/MgO | 80 wt.-% MeOH | 20°C |
| Example 3.3 | 10 wt.-% DABCO | 80 wt.-% MeOH | 20°C |
| Example 3.4 | - | 80 wt.-% MeOH | 60°C |
| Example 3.5 | 25 wt.-% Cu/MgO | 80 wt.-% MeOH | 60°C |
| Example 3.6 | 10 wt.-% DABCO | 80 wt.-% MeOH | 60°C |
| Example 3.7 | 25 wt.-% MgO | 90 wt.-% MeOH/$H_2O$ | 60°C |
| Example 3.8 | 25 wt.-% Cu/MgO | 90 wt.-% MeOH/$H_2O$ | 60°C |
| Example 3.9 | 10 wt.-% DABCO | 90 wt.-% MeOH/$H_2O$ | 60°C |
| Example 3.10 | 25 wt.-% Cu/MgO | 50 wt.-% $H_2O$ | 60°C |
| Example 3.11 | 10 wt.-% DABCO | 90 wt.-% MeOH/$H_2O$ | 90°C |
| Example 3.12 | 10 wt.-% DABCO | 50 wt.-% $H_2O$ | 90°C |
| Example 3.13 | 25 wt.-% Cu/MgO | 50 wt.-% $H_2O$ | 90°C |

In order to shorten the reaction time, a modified shaker mill with a home-built ceramic heating box to increase the reaction temperature during ball milling was used. Considering 0.2 g PU roughly contains 0.1-0.2 mmol carbamate bond, 10 wt.-% NaOH (20 mg, 0.5 mmol) can provide enough Bronsted base. The PUiNaOH-10 was depolymerized with MeOH, $H_2O$ or MeOH/$H_2O$ (1:1) at room temperature (~20 °C), 60 °C or 90 °C in the modified shaker mill. Besides DABCO, Cu supported on Mg-Al oxides (Mg:Al = 70:30) and MgO were tested.

Both the Cu catalyst and DABCO can further promote the depolymerization of PU in the presence of NaOH. When pure MeOH was used as proton source, DABCO was more efficient than the Cu catalyst, leading to 21 % and 45 % of polyol yield after 1 hour of ball milling at room temperature and 60 °C respectively, wherein the yield was significantly increased compared to the yield from NaOH alone (see Fig. 4).

Compared to glycolysis, methanolysis is cheaper and easier in regard of separation of the polyol product and the use of water as proton source would be even cheaper. However, when the same weight of $H_2O$ was mixed with MeOH, the yield of polyol significantly decreased at the same temperatures compared to when only MeOH was used. With the MeOH/$H_2O$ mixture, the 30 wt.-% Cu catalyst showed higher polyol yields than DABCO. Therefore, pure $H_2O$ was tested with the Cu catalyst, showing a significantly decreased yield.

As the pKa value is temperature dependent, the reaction temperature was further increased to 90 °C. When the mixture MeOH:$H_2O$ (1:1) was used with DABCO at 90 °C, the yield increased from 22 % to 40 %, and slightly decreased to 32 % when pure $H_2O$ was used. The 30 wt.-% Cu catalyst with $H_2O$ led to a higher yield of 43 % compared to when DABCO was used.

**Example 4: Catalytic testing - Influence of Cu loading**

The impregnated PU sample PUiNaOH-10 was prepared according to Reference Example 2 and the depolymerization was performed according to Reference Example 4. The yield of dissoluble polyol from the depolymerization was quantified by their $^1H$ NMR spectra according to Reference Example 5.

Table 4 shows an overview of the compositions of the tested samples.

| Experiment | Cleavage reagents | solvent | Temperature | Time |
|---|---|---|---|---|
| Example 4.1 | - | 50 μL $H_2O$ | 90 °C | 45 min |
| Example 4.2 | 150 mg 10wt% Cu/MgO | 50 μL $H_2O$ | 90 °C | 45 min |

(continued)

| Experiment | Cleavage reagents | solvent | Temperature | Time |
|---|---|---|---|---|
| Example 4.3 | 75 mg 20wt% Cu/MgO | 50 μL $H_2O$ | 90 °C | 45 min |
| Example 4.4 | 50 mg 30wt% Cu/MgO | 50 μL $H_2O$ | 90 °C | 45 min |
| Example 4.5 | - | 50 μL $H_2O$ | 90 °C | 90 min |
| Example 4.6 | 60 mg MgO | 50 μL $H_2O$ | 90 °C | 90 min |
| Example 4.7 | 150 mg 10wt% Cu/MgO | 50 μL $H_2O$ | 90 °C | 90 min |
| Example 4.8 | 75 mg 20wt% Cu/MgO | 50 μL $H_2O$ | 90 °C | 90 min |
| Example 4.9 | 50 mg 30wt% Cu/MgO | 50 μL $H_2O$ | 90 °C | 90 min |

Considering 50 mg of $H_2O$ (2.8 mmol) can provide enough hydrogen atoms for the hydrolysis of the 0.1-0.2 mmol carbamate bond in 0.22 g PUiNaOH, the amount of $H_2O$ was further reduced to 50 μL. After the depolymerization in a shaker mill at 90 °C for 45 minutes, all three tested Cu catalysts showed an increased yield of polyol by 20 % compared to using NaOH alone (see Fig. 5). The 30 wt.-% Cu catalyst led to slightly lower yield possibly due to the larger particle size of Cu with lower dispersion and smaller interface with support. When the reaction time was prolonged to 90 minutes, the yield obtained with Cu catalysts was only slightly increased, indicating that the depolymerization rate was pre-dominantly limited by the low content of residual carbamate bond after 45 minutes. The best yield of polyol (54%) was obtained from the depolymerization of PUiNaOH-10 at 90 °C for 90 minutes co-catalyzed by the 20 wt.-% Cu catalyst, which was 10% and 20 % higher than the yield obtained with additional commercial MgO and only NaOH respectively.

Due to the high conversion of carbamate bond at 90 °C, the differences in the catalytic performance cannot actually be compared on a rate basis, as they have not been recorded in the kinetic regime. In order to assess pure rates better, the temperature of ball milling was reduced to 75 °C. The results confirmed that 20 wt.-% Cu catalyst was superior to the other two Cu catalysts, leading to 43% dissoluble polyol in 45 minutes (see Fig. 6). This yield is almost four times higher compared to the polyol amount obtained with NaOH alone (11%), suggesting that Cu catalyst did play an important role in the NaOH catalyzed hydrolysis of PU.

**Example 5: Catalytic testing - depolymerization conducted in solution vs. shaker mill**

The impregnated PU sample PUiNaOH-10 was prepared according to Reference Example 2 and the depolymerization was performed according to Reference Example 4. The yield of dissoluble polyol from the depolymerization was quantified by their $^1H$ NMR spectra according to Reference Example 5.

Table 5 shows an overview of the compositions and conditions of the tested samples.

| Experiment | Vessel | Reagents | Conditions | Yield |
|---|---|---|---|---|
| Comparative Example 5 | Pressure Vessel | 1g PU, 10mL 1wt.-% aq. NaOH | RT, 2h | 4% |
| Comparative Example 6 | Pressure Vessel | 0.22g PuiNaOH-10, 40mg DABCO, 20mL MeOH | 60°C, 1h | 14% |
| Comparative Example 7 | Pressure Vessel | 0.2g PU, 40mg DABCO, 20mL 1wt.-% aq. NaOH | 90°C, 1h | 5% |
| Example 5.1 | Shaker mill | 0.22g PuiNaOH-10, 0.2mL MeOH | 60°C, 1h | 37% |
| Example 5.2 | Shaker mill | 0.22g PuiNaOH-10, 40mg DABCO, 0.2mL MeOH | 60°C, 1h | 45% |
| Example 5.3 | Shaker mill | 0.22g PuiNaOH-10, 40mg DABCO, 0.1mL H2O | 90°C, 1h | 32% |

It is clear, that increasing reaction temperature can significantly promote the depolymerization of PU performed under ball milling conditions. As a comparison: the depolymerization in solution at the same temperature showed much

lower yield of dissoluble polyol (see table 5). One obvious reason is that the reaction in the shaker mill has a much higher concentration of the Bronsted base (NaOH) and cleavage reagent (DABCO) compared to the reaction in solution. It is comparable to the solvent-free organic reaction without compromising mass transfer. Another possible reason is that the capability of providing hydrogen atoms may be reduced when a large amount of solvent is used because the solvent itself can also serve as the hydrogen bond acceptor. Therefore, satisfactory yield of dissoluble polyol can be recovered via a mechano-catalytic process at a lower temperature compared to the reaction in solution. The lower energy cost, lesser volume of solvent and easier separation of products potentially make this novel chemical recycling methodology more competitive than the conventional solvolysis pathways.

DESCRIPTION OF THE FIGURES

Figure 1 relates to the $^1H$ NMR spectra of 1,3,5-Tribromobenzene standard (upper curve) and the dissoluble polyol recovered from the methanolysis of PUiNaOH-10 (lower curve). The signals of the nine hydrogen atoms from the three methyl groups in the repeat unit of polyol (Peak 1) and the signals of the three hydrogen atoms on the benzene ring of the standard (Peak 2) were marked.

Figure 2 relates to the $^1H$ NMR spectra of Example 1, wherein 0.7 mL $CDCl_3$ solution was mixed with 10 mg extracted from the sample after ball milling. The marked regions label the signal area of dissoluble polyol.

Figure 3 relates to the $^1H$ NMR spectra of Example 2, wherein 0.7 mL $CDCl_3$ solution was mixed with 10 mg extracted from the sample after ball milling, wherein the influence of alcohol as proton source on the depolymerization of PU was tested.

Figure 4 relates to the NMR yield of dissoluble polyol obtained according to Reference Example 5 of Example 3, wherein the influence of temperature and proton source on the depolymerization of PU in a shaker mill was tested. Each column shows the yield of dissoluble polyol extracted by 30 mL EA after the reaction. All the experiments used PUiNaOH-10 as the substrate. "None" means there is no additional catalyst used in addition to NaOH.

**Cited literature:**

- S. Chuayjuljit et al. in J. Met. Mater. Min., 2002, 12, 19-22
- H. R. Van der Wal in J. Reinf. Plast., 1994, 13, 87-96


## Claims

1. A process for the depolymerization of polyurethanes, comprising

   (1) providing a material comprising one or more polyurethanes;
   (2) preparing a mixture M1 comprising the material provided in (1), a Bronsted base, a protic solvent, and optionally a cleavage reagent;
   (3) grinding the mixture M1 prepared in (2), obtaining a mixture M2 comprising one or more polyols;
   (4) optionally separating the one or more polyols from the mixture M2 obtained in (3).

2. The process according to claim 1, wherein from 30 to 100 wt.-%, of the material provided in (1) consists of the one or more polyurethanes.

3. The process according to claim 1 or 2, wherein the mixture M1 prepared in (2) has a solid content in the range of from 40 to 99 wt.-%, based on the total weight of M1.

4. The process according to any of claims 1 to 3, wherein the Bronsted base in (2) is an inorganic Bronsted base.

5. The process according to any of claims 1 to 4, wherein grinding according to (3) is operated at a temperature in the

range of from 170°C or less.

6. The process according to any of claims 1 to 5, wherein (2) comprises

(2.1) preparing a mixture M3 comprising the material provided in (1) and a Bronsted base;
(2.2) optionally grinding the mixture M3 obtained in (2.1);
(2.3) preparing a mixture M1 comprising the mixture obtained in (2.1) or (2.2), a protic solvent, and an optional cleavage reagent.

7. The process according to claim 6, wherein (2) comprises

(2.1) preparing a mixture M3 comprising the material provided in (1) and a Bronsted base;
(2.2) grinding the mixture M3 obtained in (2.1);
(2.2.1) separating the solvent from the mixture obtained in (2.2)
(2.3) preparing a mixture M1 comprising the mixture obtained in (2.2.1), a protic solvent, and optionally a cleavage reagent.

8. The process according to claim 6 or 7, wherein grinding according to (2.2) is carried out at a temperature in the range of from 10 to 50 °C.

9. The process according to any of claims 6 to 8, wherein independently from each other grinding in (2.2) is carried out in a mill, wherein the mill is operated at a speed in the range of from 300 to 900 rpm.

10. The process according to any one of claims 1 to 9, wherein independently from each other grinding in (2.2) or (3) is carried out in a mixing device.

11. The process according to claim 10, wherein independently from each other grinding in (2.2) or (3) is carried out in a milling device using grinding media.

12. The process according to claim 11, wherein the filling degree of the grinding media in the milling device is in the range of from 10 % to 60%.

13. The process according to any of claims 1 to 12, wherein independently from each other the mixture prepared in (2) or (2.3) comprises one or more cleavage reagents selected from the group consisting of DABCO, DBU, MgO, Cu/MgO, Ru, Ag, Pd, and Mn, and a mixture of two or more thereof.

14. The process according to any of claims 1 to 13, wherein independently from each other the mixture M1 prepared in (2) or (2.3) comprises a protic solvent selected from the group consisting of formic acid, n-butanol, isopropanol, nitromethane, ethanol, methanol, acetic acid and water, and a mixture of two or more thereof.

15. The process according to any of claims 1 to 14, wherein independently from each other grinding in (2.2) or (3) is carried out for a duration in the range of from 0.1 to 6 h.

Figure 1

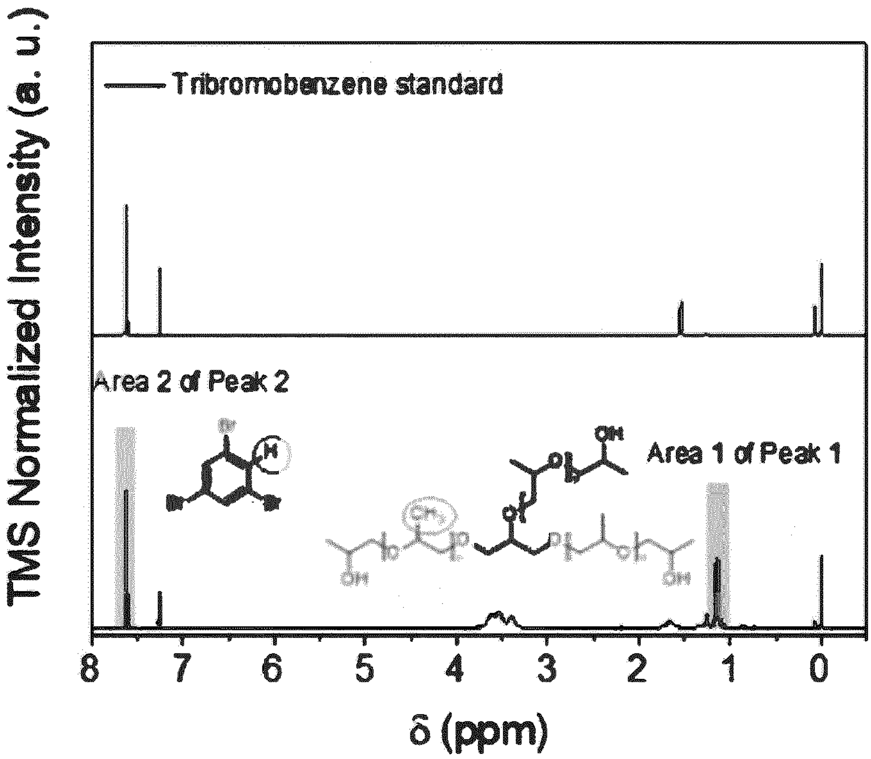
Tribromobenzene standard
Area 2 of Peak 2
Area 1 of Peak 1
TMS Normalized Intensity (a. u.)
8
7
6
5
4
3
2
1
0
δ (ppm)

Figure 2

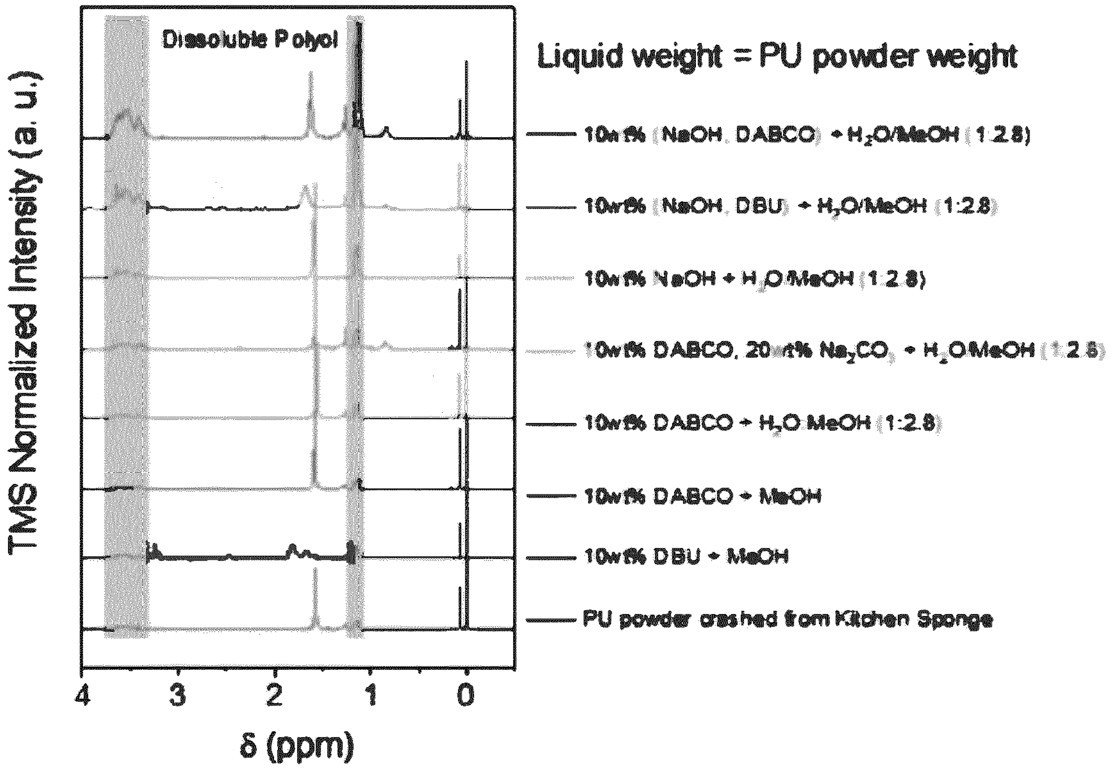
Dissolubie Polyol
Liquid weight = PU powder weight
10wt% (NaOH, DABCO) + $H_2O$/MeOH (1:2.8)
10wt% (NaOH, DBU) + $H_2O$/MeOH (1:2.8)
10wt% NaOH + $H_2O$/MeOH (1:2.8)
10wt% DABCO, 20wt% $Na_2CO_3$ + $H_2O$/MeOH (1:2.8)
10wt% DABCO + $H_2O$/MeOH (1:2.8)
10wt% DABCO + MeOH
10wt% DBU + MeOH
PU powder crashed from Kitchen Sponge
TMS Normalized Intensity (a. u.)
4
3
2
1
0
δ (ppm)

Figure 3

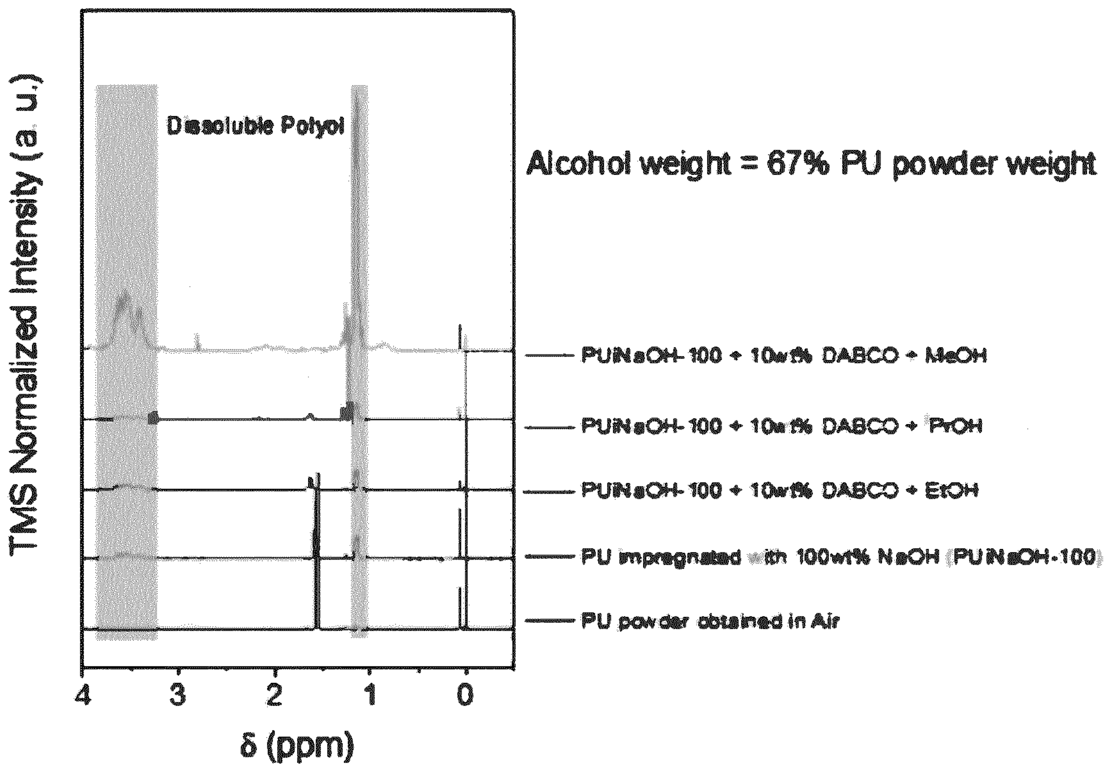

Dissoluble Polyol
Alcohol weight = 67% PU powder weight
PUiNaOH-100 + 10wt% DABCO + MeOH
PUiNaOH-100 + 10wt% DABCO + PrOH
PUiNaOH-100 + 10wt% DABCO + EtOH
PU impregnated with 100wt% NaOH (PUiNaOH-100)
PU powder obtained in Air
TMS Normalized Intensity (a. u.)
4
3
2
1
0
δ (ppm)

Figure 4

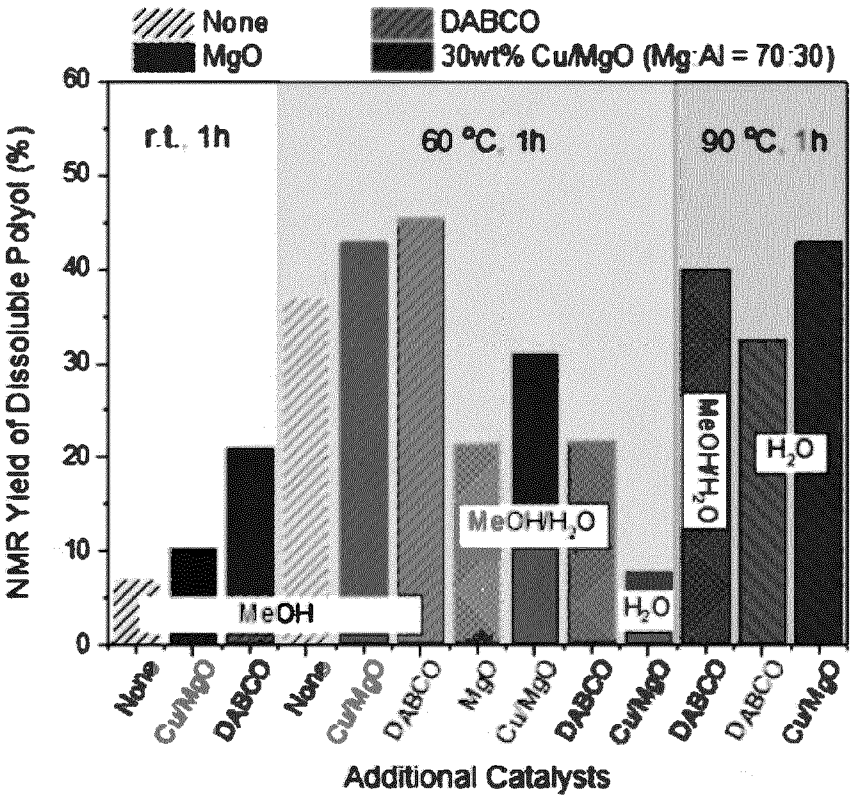
None
DABCO
MgO
30wt% Cu/MgO (Mg:Al = 70:30)
NMR Yield of Dissoluble Polyol (%)
r.t., 1h
60 °C, 1h
90 °C, 1h
MeOH
MeOH/H2O
H2O
MeOH/H2O
H2O
None
Cu/MgO
DABCO
None
Cu/MgO
DABCO
MgO
Cu/MgO
DABCO
Cu/MgO
DABCO
DABCO
Cu/MgO
Additional Catalysts

Europäisches Patentamt
European Patent Office
Office européen des brevets

# EUROPEAN SEARCH REPORT

Application Number
EP 23 17 8044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2016/347927 A1 (TAHERI KAMBIZ [CA] ET AL) 1 December 2016 (2016-12-01)<br>* paragraphs [0084] - [0085]; claims 1, 3, 4, 12; examples 1-2 * | 1-12,14, 15<br>13 | INV.<br>C08J11/14<br>C08J11/16<br>C08J11/24<br>C08J11/26 |
| Y | US 11 339 268 B2 (UNIV CASE WESTERN RESERVE [US]) 24 May 2022 (2022-05-24)<br>* column 5 lines 18-33; claims 1, 6 * | 13 | |
| Y | CN 115 260 580 A (UNIV ZHEJIANG TECHNOLOGY; SINOMAX ZHEJIANG POLYURETHANE NEW MAT CO LTD)<br>1 November 2022 (2022-11-01)<br>* example 1 * | 13 | |
| | | | TECHNICAL FIELDS SEARCHED (IPC) |
| | | | C08J |

The present search report has been drawn up for all claims

1

| Place of search | Date of completion of the search | Examiner |
|---|---|---|
| The Hague | 24 November 2023 | Mooibroek, Tiddo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 17 8044

This annex lists the patent family members relating to the patent documents cited in the above-mentioned European search report. The members are as contained in the European Patent Office EDP file on
The European Patent Office is in no way liable for these particulars which are merely given for the purpose of information.

24-11-2023

| Patent document cited in search report | Publication date | Patent family member(s) | Publication date |
| --- | --- | --- | --- |
| US 2016347927 A1 | 01-12-2016 | CA 2922737 A1 | 05-03-2015 |
| | | US 2016347927 A1 | 01-12-2016 |
| | | WO 2015027319 A1 | 05-03-2015 |
| US 11339268 B2 | 24-05-2022 | NONE | |
| CN 115260580 A | 01-11-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **S. CHUAYJULJIT et al.** Chemical recycling of rigid polyurethane foam scrap via base catalyzed aminolysis. *J. Met. Mater. Min.,* 2002, vol. 12, 19-22
- **H. R. VAN DER WAL.** New Chemical Recycling Process for Polyurethanes. *Journal of Reinforced Plastics and Composites,* 1994, vol. 13, 87-96
- **S. CHUAYJULJIT et al.** *J. Met. Mater. Min.,* 2002, vol. 12, 19-22
- **H. R. VAN DER WAL.** *J. Reinf. Plast.,* 1994, vol. 13, 87-96